# EUROPEAN PATENT APPLICATION

(11) **EP 1 041 423 A2**
(43) Date of publication of application: **04.10.2000**
(21) Application number: 99123462.6
(22) Date of filing: 25.11.1999
(51) Int. Cl.: G02C 11/00, E05B 73/00

(54) **Anti-theft device for eyeglasses displayed to the public in department stores and the like**

(30) Priority: 31.03.1999 IT MI990660
(71) Applicant: PLASTI-MAX SpA, 24064 Grumello del Monte (IT)
(72) Inventor: Mazzucchelli, Corrado, c/o PLASTI-MAX S.p.A., 24064 Grumello del Monte (BG) (IT)
(74) Representative: Trupiano, Roberto

(57) **Abstract**

Anti-theft device for temple-eyeglasses displayed to the public in department stores, constituted by a block formed by a rigid base plate, surmounted by a transversal bridge for housing an eyeglasses temple and by a prong structure wide apart with respect to the base plate.

Under said bridge, a structure from elastically yielding material so shaped as to have a tang protruding from the end of said wide apart prong is removably anchored.

After the introduction of the side under said bridge with a positioning between said rigid base plate and the flexible structure above the side, the block is shifted against the hinge of the eyeglasses until said tang is positioned against the glass lens and then, once the side is open, its locking is performed by means of screws or the like, acting directly on said flexible structure, to avoid damages and scratches on said side and the glass lens.

## Description

The present invention relates to an anti-theft device for temple-eyeglasses displayed to the public in department stores and the like.

As is known, in order to prevent the possible theft of eyeglasses freely displayed to the possible purchasers with the possibility of trying them on before the purchase, various protection devices have been proposed, including some very simple ones, for instance constituted by a see-through envelope which leaves the eyeglasses on sight or by the application to the same of large and more or less rigid labels; in other cases, blocks are provided constituted by two parts coupleable with each other, of various shape and size, which are inserted on at least a temple or side and locked, around or near to the hinge, according to various systems that can thereafter be opened only by the seller on the purchase.

These known devices have in the practice several drawbacks in that they either do not prevent the illicit removal of the eyeglasses and their concealment in a pocket or are bulky or little practical during the trying-on; besides, in case of use of side locking blocks in open position, the body from rigid material which locks the hinge may hit the glass lens during the trying-on, damaging it beyond repair.

Lastly, the known locking devices constituted by rigid bodies including the side of the eyeglasses, and coupled with each other by means of fit-in or screw elements may damage also the same side during the trying-on, because of the unavoidable clearances that create between the locking bodies and said side.

Object of the present invention is to provide an anti-theft device for temple-eyeglasses displayed to the public, so designed and structured as to eliminate the drawbacks of the known devices, whatever the form of the cross-section of the temples or sides of the eyeglasses and the size of the same, allowing in any case an easy trying-on on the face.

Another object of the invention is to provide an anti-theft device of the above specified type, structured in such a way as to allow the display of the eyeglasses with at least a side entirely open, without running the risk of damaging either said side or the glass lens of the eyeglasses, even after many trying-ons on the face.

A further object is to provide an anti-theft device suitable for sides or temples of various sections and shapes, always with a stable locking and great easiness of unlocking at the time of the sale.

A not least object is to provide a re-usable device, with an obvious saving from both the practical and the economic points of view, and to allow the application on at least one flat face thereof of a label carrying information, mark, bar-code and the like.

These and still other objects that will be more clearly stressed by the following description are achieved by and anti-theft device for temple-eyeglasses displayed in department stores and like facilities, which device is constituted, according to the present invention, by a block formed by a rigid base plate surmounted by a transversal bridge having a substantially rectangular span for the slack insertion of a side of the eyeglasses, and by a prong structure angularly wide apart with respect to said base plate, there being removably anchored in the inside of said bridge a structure from elastically yielding material having the function of a gasket and so shaped as to have a flexible tang protruding from the end of said wide apart prong, in such as way as to allow, after the introduction in said bridge of an open eyeglasses side and the positioning between said base plate and the flat part of the gasket and after the sliding of the block against the hinge of the side until said tang is positioned against the glass lens, the realisation of the side locking in open position by locking means acting on said gasket without damaging said side and/or scratching the glass lens during the trying-on operations on the face.

More particularly, said side locking means in the inside of the bridge are constituted, according to a first embodiment, by a screw that goes vertically through said bridge until it disappears in the same, said screw being driven by means of a removable key kept by the seller.

According to another embodiment, said side locking means between the gasket and the rigid base plate of the block are realised with fit-in and like means pressure activated to realise the lockup and through levers or the like to obtain the opening.

Besides, always according to the invention, said structure from elastically yielding material includes a flat part that can be inserted under said bridge, peripherally provided with raised borders, of which the one opposite to said flexible tang is provided with a notch suitable to house and stably restrain a temple of eyeglasses having a circular, oval or like cross-section, during the locking stage.

Besides, always to impart stability to the temple both during and after the locking, in the base plate of the block a rectilinear groove is obtained having a substantially arched cross-section, especially suitable to retain temples having a circular or polygonal section, while in case of flattened temples, said flexible gasket part which remains in contact with the temple is preferably realised according to an entirely flat design.

Lastly, to keep in stable position the flexible gasket in the inside of said bridge, there is obtained, at the end of said prong protruding from said bridge, a tooth or projection suitable to snap-engage into a bridge transversally protruding from the flat base of the gasket in correspondence of the start of said flexible tang.

Further characteristics and advantages of the present invention will be stressed by the following detailed description, made with reference to the attached drawings, wherein:
Figure 1 shows, in perspective view, a rigid block constituting the base of the anti-theft device realised according to the invention and illustrated without the internal flexible gasket;
Figure 2 shows, also in perspective view, an elastically yielding structure having the function of a gasket for temples having a circular or polygonal section;
Figure 2a shows an elastically yielding structure for flattened temples;
Figure 3 shows, in perspective view, the anti-theft device in the assembly stage on an eyeglasses temple;
Figure 4 shows, in cross-section view according to line IV-IV of Figure 3, the back zone of the device of Figure 3 (according to arrow A), but with a locked temple, while
Figure 5 shows, always in perspective view, the anti-theft device assembled on eyeglasses, so as to keep the temple in a stable open position.

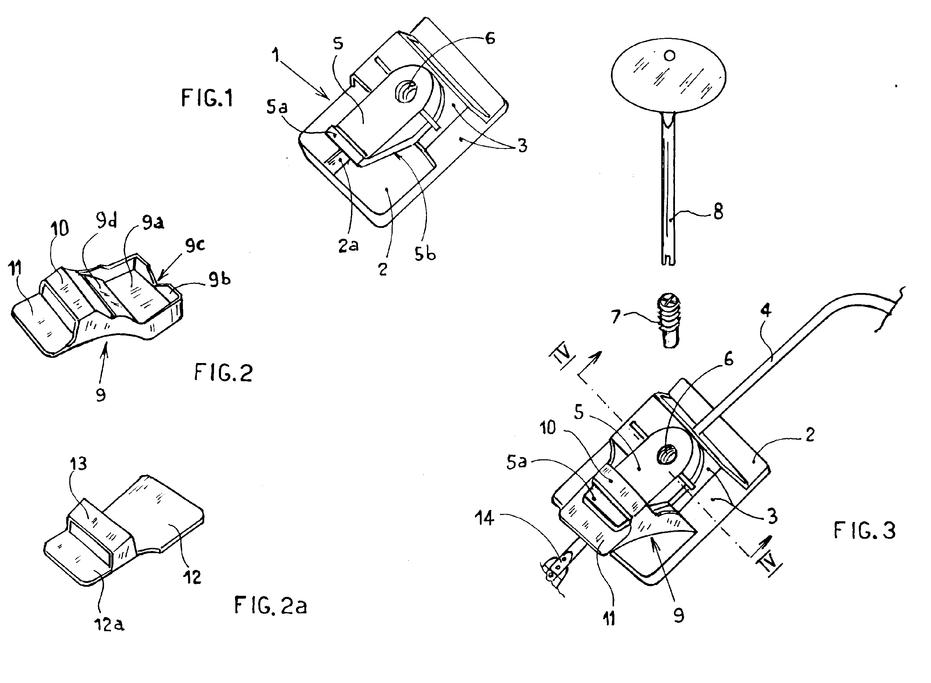

With reference to the above figures, and in particular to Figures 1-3, the anti-theft device of the present invention is substantially constituted by two separated components that can be fitted the one into the other.

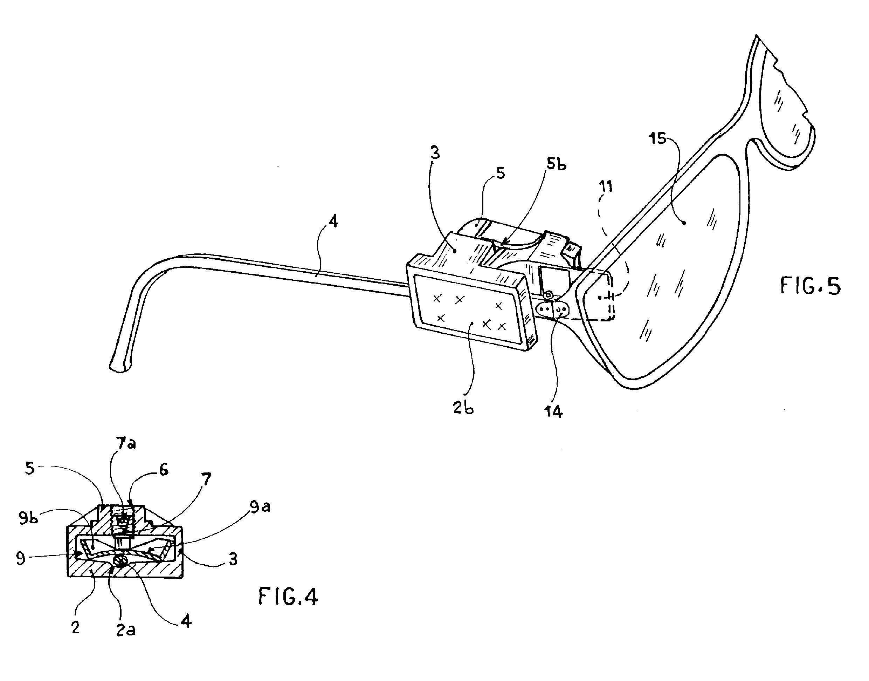

The first component is constituted (Figure 1) by a block 1 from rigid material, substantially rigid plastics and comprises a rectangular base plate 2, on a face of which a bridge 3 is transversally placed, suitable to allow the slack passage of a side or temple 4 of eyeglasses having closeable temples. On the horizontal upper side of bridge 3 an element 5 protrudes having the shape of a substantially triangular prong and ending by a protruding step 5a (Figure 1); said prong 5 has a length shorter than that of the base plate 2 and its flat lower side 5b (Figs. 1-5) is wide open with respect to the base plate 2. Besides, the transversal bridge 3 and the above standing prong 5 are gone through centrally by a threaded through-hole 6, within which a screw-pin 7 can be screwed until it disappears, and which is provided with front toothing 7a (Figure 4) designed to be driven by a key 8 also provided with a front toothing 8a so arranged as to engage with toothing 7a of pin 7; besides, on the rigid base 2 a groove 2a may be obtained, suitable to restrain a side during the locking of the device, as will be better clarified later on.

The second component, which can be inserted in block 1, is constituted, instead, by a structure la from elastically yielding material, globally indicated by 9 in Figures 2-4, formed by a body 9a having substantially the shape of a quadrangular basin, with flat bottom and border 9b provided with a triangular notch 9c, while the opposite border 9d is extended and so shaped as to appears as an arch or bridge 10 wherefrom a quadrangular flange 11 integrally protrudes. The dimensions of this component are such as to allow the insertion of the whole of it under bridge 3 of block 1, i.e. with the flat part 9a leaning on the part of the base plate 2 covered by bridge 3,with the arched part 10 inserted at the end of prong 5 until it stops against the stopping tooth 5a, and with the flexible flange 11 protruding from the end of the prong, as shown by Figure 3.

Always according to the invention, the flexible component may be realised as shown in Figure 2a, i.e. with the flat part 12 without borders substantially coplanar with the flexible tang 12a and the restraining arch 13 protruding between the flat part 12 and tang 12a.

The two-component anti-theft device above described and illustrated is usable for keeping stably in open position a side or temple whose cross-section has a cylindrical or oval, or also flattened form, as often are, for instance, the sides of sunglasses and the like.

Therefore, in case of eyeglasses having sides with a cylindrical or oval cross-section, the anti-theft device uses block 1 provided with an elastically yielding or flexible structure 9, as shown in Figure 2.

In this case, after the insertion of the flexible structure 9 into block 1 and stable stop of arch 10 of the flexible structure against tooth 5a of prong 5, side 4 (Figure 3) is inserted in the block, and more precisely between the bottom part 9a of the flexible structure and the rigid base plate 2; in this situation, side 4 remains in a substantially central position with respect to the block, as recess or groove 2a, obtained in the base plate, guides or contributes to restrain said side; then block 1 with the associated flexible structure is pushed until it reaches hinge 14 of the side, in such a manner as to allow the flexible flange 11 to position near the glass lens 15, and then, after the rotation of the block around the side until said flange is practically in touch with the glass lens (Figure 5), the block is locked on the side by screwing screw 7 by means of key 8, until the screw disappears into the body of prong 5, as shown in Figure 4.

From said Figure 4, one clearly notices that the starting insertion of side 4 between the rigid base plate 2 of the block and the underlying face of the flat part 9a of the flexible structure involves a deformation, i.e. a lifting of the central part of part 9a, with a curving around the side, which lifting is made easier by the triangular notch 9c of the flexible structure. Then, the locking by lowering screw 7 towards the side exercises a pressure not directly on the side but through the thickness of the flat part 9a of the flexible structure, so that the side is not marked or scratched by the end of the screw. Therefore, part 9a constitutes a protection or gasket that does not damage the surface of the side. Besides, as is clearly shown in Figure 4, border 9b of the flexible structure takes on, after the locking, the form of two opposite triangles united at their apexes, which, being from an elastically yielding material as the whole flexible structure, can take again their starting shape allowing therefore to re-use said structure, whenever required.

In case of eyeglasses with flattened or large sides or temples, there is used, according to the present invention, the flexible structure of Figure 2a, which, being substantially all flat, easily fits with flattened or prismatic sides.

From what has been expounded above, it is clear that the block with the flexible component, and in particular with the yielding prong in touch with the glass lens, prevents the closing of the eyeglasses temple, discouraging ill-intentioned people, allowing at the same time an easy trying-on of the eyeglasses on the face without damaging the glass lens.

Besides, the locking by means of a key 8 allows the easy unlocking of the device by the personnel employed in the sale of the eyeglasses displayed to the public; besides, on the on-sight face (2b) (Figure 5) of the rigid base 2 of the block, information, marks, bar-codes and the like may be reported.

In the practice, there may be used for locking the above described device, instead of a screw with a driving key, also other means, such as for instance a lever oscillating transversally with respect to the side and snap-lockable by pressing recessings obtained on the lever against fixed teeth protruding in the inside of the rigid bridge 3; the unlocking may be then performed by means of a shaped tool able to free said oscillating lever from the restraining teeth.

However, in the practical realisation, further structurally and functionally equivalent modifications and variants may be introduced in the invention as described and illustrated, without departing from the protection scope of said invention.

## Claims

1. An anti-theft device for eyeglasses with sides or temples tiltable on the frame, displayed for sale in department stores and the like, characterised in that it is constituted by a block (1) comprising a rigid base plate (2) surmounted by a transversal bridge (3) having a substantially rectangular span for the slack insertion of a side (4) of the eyeglasses, and by a prong structure (5) angularly wide apart with respect to said base plate (2), there being removably anchored, in the inside of said bridge (3), a structure (9-9a) from elastically yielding material having the function of a gasket and so shaped as to have a flexible tang (11) protruding from the end of said prong (5) wide apart so as to allow, after the introduction into said bridge (3) of an open eyeglasses side (4) and the positioning between said base plate (2) and the flat part (9a) of the gasket and the sliding of block (1) towards hinge (14) of side (4), until said flexible tang (11) is positioned against the glass lens (15), the realisation of the locking of the side in an open position by locking means acting on said gasket, without damaging said side and/or scratching the glass lens (15) during the trying-in operations on the face.

2. The anti-theft device according to claim 1, characterised in that said means for locking the side in the inside of bridge (3) are constituted, according to a first embodiment, by a screw (7) passing vertically through said bridge until it disappears in the same, which screw is driven by a removable key (8) kept by the seller.

3. The anti-theft device according to claim 1, characterised in that said means for locking the side (4) interposed between gasket (9a) and the rigid base plate (2) of block (1) are constituted by fitting-in means associated to bridge (3), closeable by hand pressure and openable by a suitably shaped lever or the like.

4. The anti-theft device according to claim 1, characterised in that said structure from elastically yielding material includes a flat part (9a) that may be housed under said bridge (3) and peripherally provided with raised borders, of which the one (9b) opposed to said flexible tang (11) is provided with a central angle notch (9c) constituting a stress raiser for housing, guiding and restraining a temple (4) having a substantially circular, polygonal or like cross-section, during the locking stage and after said locking.

5. The anti-theft device according to claim 1, characterised in that in the rigid base plate (2) of block (1), also a rectilinear groove or throat (2a) is obtained, suitable to restrain the temple both during and after the locking of said temple (4).

6. The anti-theft device according to claim 1, characterised in that, in case of temples (4) having a very large and flattened section, said flat part (9a) of said flexible structure (9), intended for remaining in touch with the wider face of the temple, is realised according to an entirely flat design (12-12a).

7. The anti-theft device according to claim 1, characterised in that, in order to keep, in a stable position said flexible structure (9) under said bridge (3) at the end of said prong (5) protruding from said bridge (3), a tooth or protrusion (5a) is obtained, suitable to constitute an eyelet- or bridge-like hooking means (10) transversally protruding from the flat base (9a) of the flexible structure (9), in correspondence of the starting zone of said flexible tang (11).
